# EUROPEAN PATENT APPLICATION

(11) **EP 1 055 363 A2**
(43) Date of publication of application: **29.11.2000**
(21) Application number: 00304431.0
(22) Date of filing: 25.05.2000
(51) Int. Cl.: A01G 9/02, A01G 9/16

(54) **Hanging basket greenhouse**

(30) Priority: 27.05.1999 GB 9912442
(71) Applicant: Sharon Elizabeth Ebanks, Birmingham, West Midlands B21 8JQ (GB)
(72) Inventor: Sharon Elizabeth Ebanks, Birmingham, West Midlands B21 8JQ (GB)
(74) Representative: Barnfather, Karl Jon, Dr.

(57) **Abstract**

A suspended or upheld greenhouse (10) for cultivating vegetable matter held within a suspended or upheld container (70) comprising a shell (12) supported by the container (70) or part of the container (70) and adapted to substantially surround the container (70).

## Description

This invention relates to horticultural greenhouses, and in particular a suspended or upheld greenhouse for use with hanging baskets, trays and the like containing seeds, plants or flowers.

Greenhouse structures are widely used in agriculture and horticulture. They can range from large ornamental glass houses used for protecting tropical plants to the common garden greenhouse. They normally rest on the ground or are supported by walls or the like resting on the ground. They make use of the characteristic that ultra violet (UV) radiation passes through the greenhouse glass and so heats the plants, air and soil within the greenhouse, producing infra-red (IR) radiation within the greenhouse. The greenhouse glass is substantially opaque to this lower frequency radiation, and therefore the heat is retained within the greenhouse structure. Thus, greenhouse structures serve to protect and shelter plants, and also provide complimentary heating effects, thereby speeding up the rate of propagation or growth of the vegetable matter.

An object of the present invention is to provide a suspended or upheld greenhouse that is portable. Another object is to provide a greenhouse that is suitable for substantially enclosing a hanging or supported basket/tray or the like for the purpose of germinating, propagating or cultivating vegetable matter.

According to one aspect of the invention, there is provided a suspended greenhouse for cultivating vegetable matter held within a suspended container comprising a shell dimensioned to substantially surround the container and having means to maintain the shell in a desired suspended or upheld position.

Preferably, support means co-operate with the container to maintain the shell around the container, whether suspended or upheld.

According to another aspect of the invention there is provided an upheld portable greenhouse for cultivating vegetable matter held within an upheld container comprising a shell supported by the container or part of the container and adapted to substantially surround the container.

According to another aspect of the invention there is provided a suspended or upheld greenhouse comprising a substantially transparent shell sized to fit around a container for plants.

Preferably, the shell is dimensioned to substantially surround the container and preferably at least part of the shell is made of a material translucent to sunlight

The shell may comprise an inner and outer wall with an air gap between. The shell may comprise a plurality of portions that interlocked by fixing means. The shell may comprise an upper and a lower portion. The shell may be in at least two parts, comprising co-operating locking means. These co-operating locking means may comprise a lug and key way type arrangement, or co-operating screw threads.

The shell can be substantially spherical in shape and two parts that form it can be substantially identical, for example in the form of hemispheres and at least one portion of the shell may have an aperture or plug to facilitate either drainage or ventilation of the greenhouse. The shell may be substantially circular, arcuate, elliptical or parabolic in cross section along at least one plane. Thus, the shell may be substantially spherical, hemispherical, conical, spherical-conical, frustro-conical, geodesic or pyramid in shape.

The shell may be constructed from rigid materials such as tough plastics such as PERSPEX (TM) or acrylic, glass or from flexible sheet material. The shell may have inflatable ribs formed from sheet material, these ribs being provided to achieve the desired shape of shell. Alternatively, the desired shape of shell may be achieved by attachment of at least one frame member, such as a loop, to the shell, preferably by means of sleeves and the like.

Tethering means may be provided to attach the shell of the greenhouse to an adjacent object, for example a wall or post, thereby to help reduce excess movement due to wind for example.

The upper part only of the shell may be transparent, or substantially the whole shell may be transparent. The shell may have an aperture to allow the suspension device to pass through the shell to the container and this aperture may co-operate with the suspension device to maintain the hanging container in position. A plug or filler plate can be provided to cover the aperture, and this may have cut outs to receive the suspension device. Also, a further aperture may be provided in the lower portion of the shell to allow for drainage.

The invention will now be described, by way of example only, with reference to the following schematic figures, in which:
FIGURE 1 is a side view of a suspended greenhouse in accordance with the invention,
FIGURE 2 is a sectioned side view of the upper hemispherical portion of a suspended greenhouse,
FIGURE 3 is a plan view of the upper hemispherical portion of the suspended greenhouse of Figure 2,
FIGURE 4 is a perspective view of one type of connector used to attach two portions of a shell in accordance with the invention,
FIGURE 5 is a side view of a plug that may be used to fill an aperture in an upper or lower portion of a shell in accordance with the invention,
FIGURE 6 is a plan view of the plug of Figure 5,
FIGURE 7 is a further side view of a suspended greenhouse according to the invention having a suspended tray, and tethering means to secure the shell in position,
FIGURE 8 is a side view of a tray for use with a shell in accordance with the invention,
FIGURE 9 is a plan view of the tray shown in Figure 7,
FIGURE 10 shows perspective views of part of a tray for use with a shell in accordance with the invention having attachment means adapted to avoid unwanted drainage of water.
FIGURE 11 shows a side view of a hemispherical portion of a shell made from flexible material and having inflatable ribs, and
FIGURE 12 shows a shell made from flexible material and using three hoops attached thereto in order to achieve a frustro-conical shape.

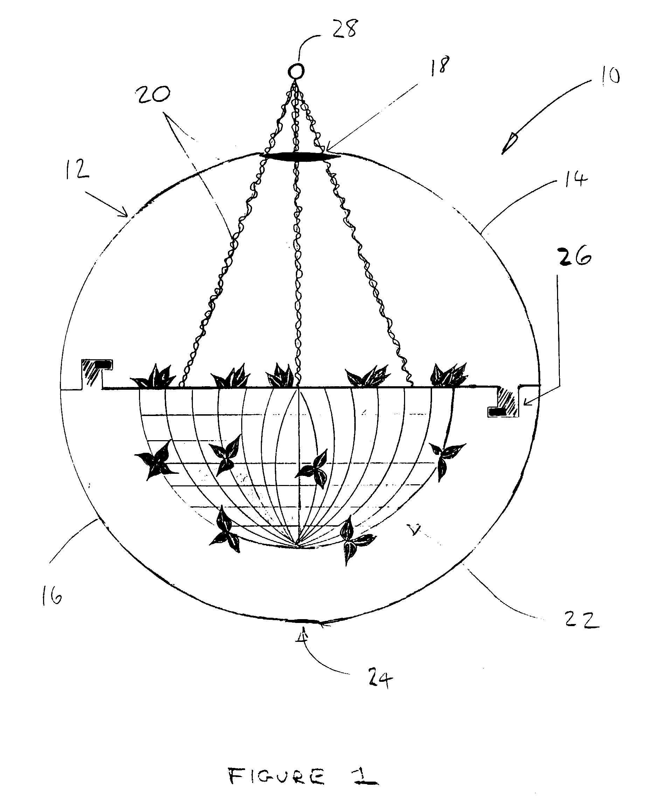

Referring to Figure 1, a suspended greenhouse 10 for substantially enclosing a hanging basket 22 is shown. Greenhouse 10 comprises a spherical shell 12 that may be made up of more than one part, for example complimentary hemispheres 14 and 16 as shown. An aperture 18 may also be provided near the top of upper hemisphere 14, to allow the watering of, and access to, plants located within the shell 12. Aperture 18 also helps to hold the shell 12 of greenhouse 10 in position by engaging conventional chains 20, or another suspension device, attached to hanging basket 22. A further aperture 24 may also be provided near the bottom of the lower hemisphere 16 of shell 12, to allow drainage of excess water from the greenhouse. Also, if shell 12 comprises more than one part, as shown, the parts may be joined by a connector or co-operating locking means 26. This locking means may be within the shell or on external rims.

Although Figure 1 shows a spherical greenhouse shell 12, other shapes are equally suitable. Thus, greenhouse shell 12 may be cylindrical, cuboid, pyramid shaped, diamond shaped, or any other shape that conveniently encloses a basket, tray or the like. Typically, all of shell 12 is transparent but part may be transparent and part may be opaque, for example the upper part 14 may be transparent whereas the lower part 16 may be opaque. Shell 12 may also be made from a partially transparent material. Also, although the two part arrangement is shown in Figure 1, has an equatorial join, other arrangements may be possible. For example, shell 12 may be formed by more than two portions, joined vertically, or aligned in a suitable orientation.

Figure 1 shows the circumferential rim of aperture 18 resting on the support chains 20, to hold the greenhouse 10 in position around hanging basket 22. However, other means of support are also possible. For example, chains 20 could be replaced by another form of suspension device, such as a solid elongate rod or rods which could extend from the centre of the basket to an attachment loop, for example attachment loop 28 as shown. In this case, suitable projections could be provided on the rod or rods to engage with aperture 18 and hold the shell 12 in position. Basket 22 may also be supported by a wall bracket or the like connected to a side portion or underside portion of the basket.

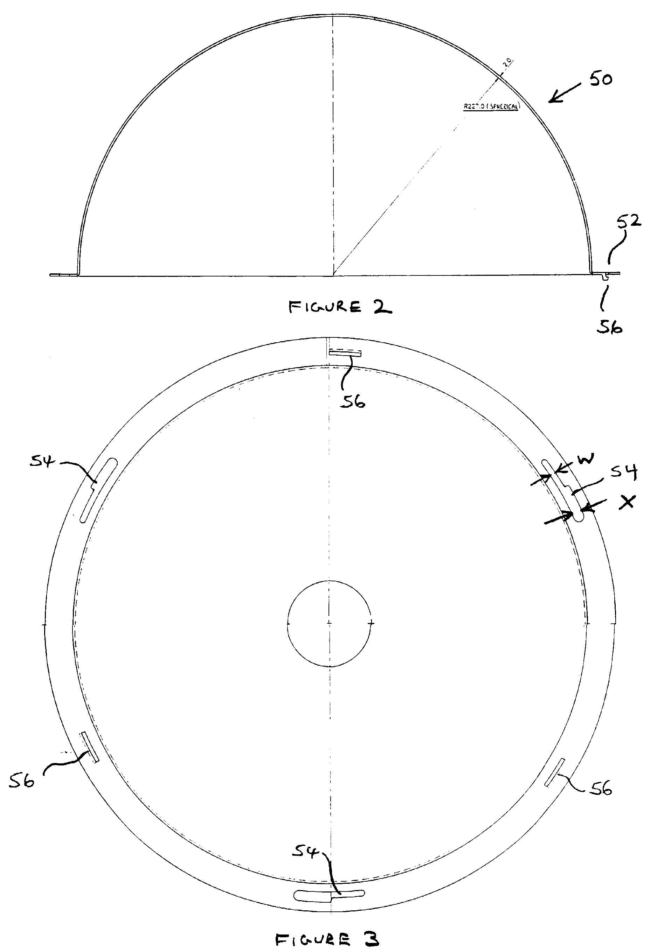

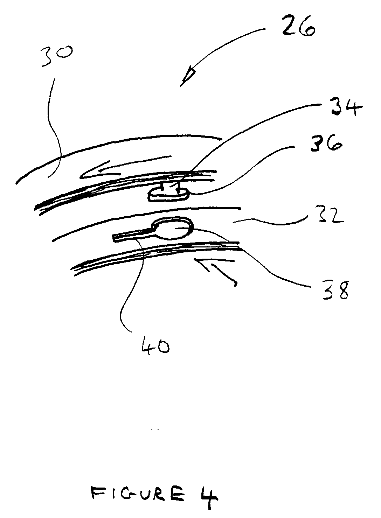

Figures 2 and 3 show an upper hemispherical portion of a shell 50 with an annular flange 52 having three equidistantly spaced arcuate notches 54 one half of the each slot having a width W and the other half having a greater width X. Typically,dimension X is approximately twice dimension W. The end portions of notches 54 are generally semicircular in shape. Flange 52 also has three equidistantly spaced claw members 56 adapted to engage notches in the rim of a lower hemisphere having an identical flange arrangement (not shown). To lock the upper and lower hemispheres together the claws of the upper and lower hemispheres are aligned face to face with the wider portions of the corresponding notches and the flanges are then rotated relative to each other so that the claws engage the narrower portion of the arcuate notches. Unlocking is achieved by simply reversing this process.

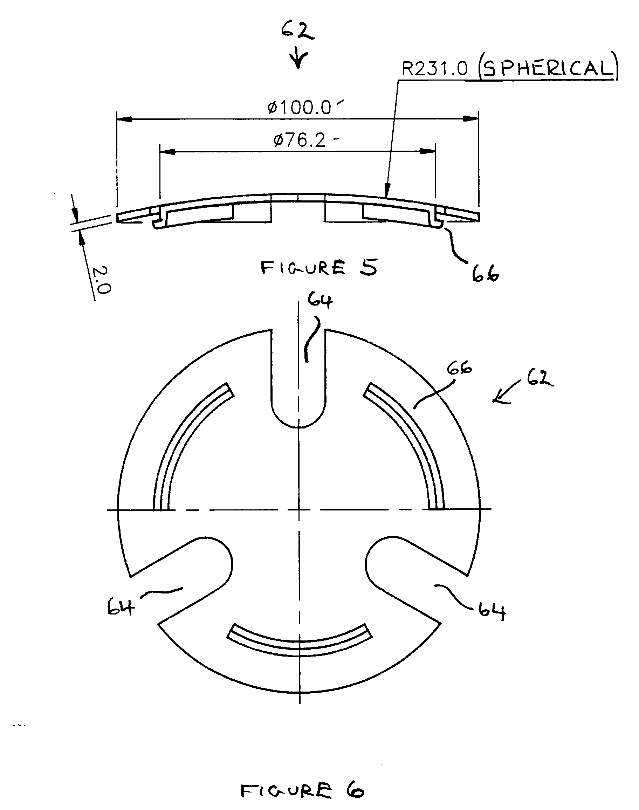

Figure 4 shows another form of flange locking means 26. This attaches the different shell parts together, for example ring-shaped flanges 30 and 32 which may be located on appropriate parts of the shell sections. As shown, connector 26 comprises a lug 34 with a head 36, located on flange 30, and a co-operating aperture 38 sized to fit head 36 that is located on flange 32. To connect the shell parts head 36 is inserted through aperture 38 and then respective flanges 30 and 32 are rotated relative to each other so that lug 34 slides within a slot 40 which leads from aperture 38. Of course, other types of connector may be used, for example a screw thread type connection, or other types of bayonet or snap to fit fittings known in the art of connectors.

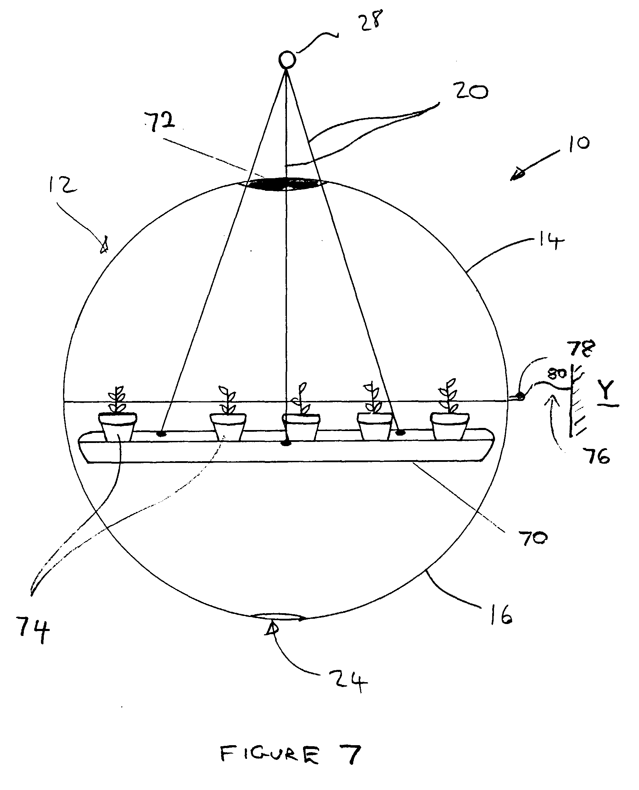

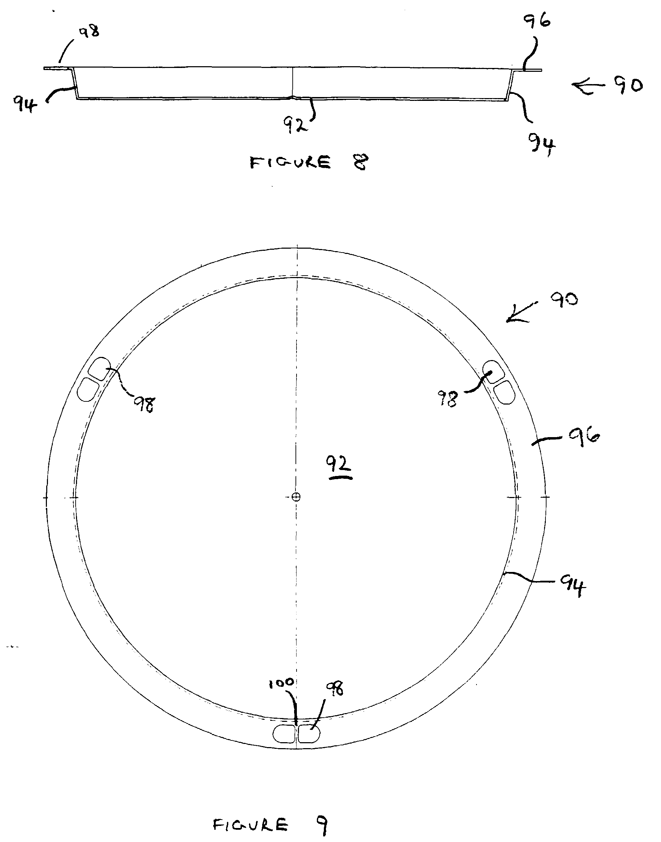

Figures 5 and 6 show a plug 62 that can be positioned over aperture 18 to help retain heat within shell 12 and help prevent the ingress of rainwater. Plug 62 may be substantially circular, as shown, and may have cut out or spacing portions 64 for a chains 20, or other suspension devices. Arcuate flanges 66 integrally formed the underside of the lid are provided. These engage corresponding slots (not shown) in aperture 18 or plug 62. Alternatively plug 62 may be made of a somewhat resilient material thereby allowing a snap fit. Many different types of plug shape and cut out shape are possible, depending on the type of suspension device used and the shape of the aperture to be plugged. For example, a plug with a central aperture or cut out could be used, and the plug could be rectangular, hexagonal and so on.

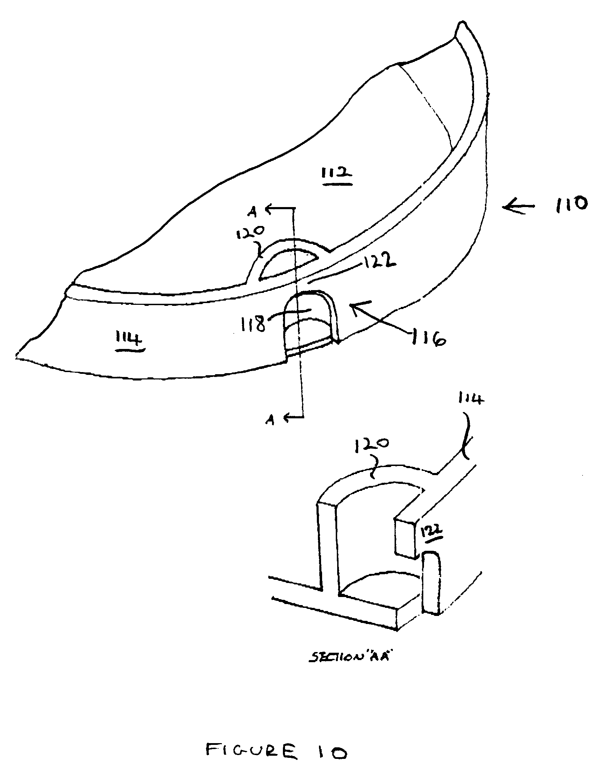

Figure 7 shows a suspended greenhouse 10 in use as a germination device for seeds or small plants contained in a tray 70. Plug 72 is shown in position so that heat is retained within the shell 12 and a tray 70 is shown to contain plants and plants pots 74. A tether or attachment device 76 is provided to attach and secure greenhouse 10 proximal to a wall Y. Shell 12 may be provided with an attachment 78, for example an eyelet attachment, for connection to a wall via a tether or a flexible member 80 such as a chain or wire. In this way, excessive movement of the greenhouse 10 in windy conditions is prevented, thereby protecting the greenhouse and plants contained within from physical damage.

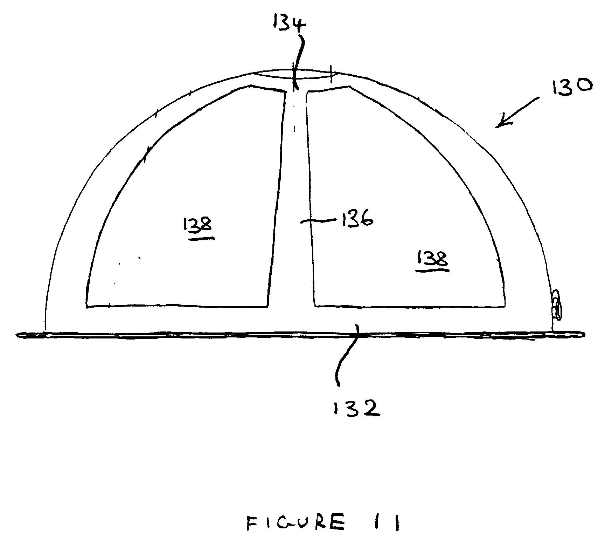

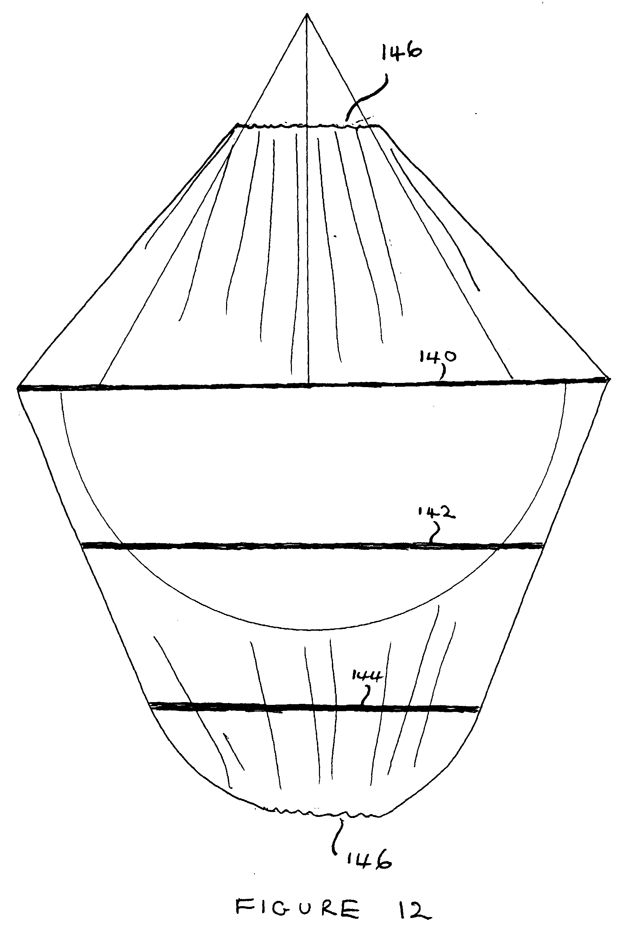

In another form the invention may include a basket or tray specifically adapted to fit within a shell 12. Figures 8 and 9 show a suitable tray 90 having a generally flat circular base portion 92 side walls 94 and annular rim portion 96. Three pairs of holes 98 with an intermediate rim portion 100 are provided, generally equidistantly spaced around rim 96, to allow the tray to be suspended on chains, or the like, as described above.

Figure 10 shows a perspective view of part of a tray 110 with a circular base 112 and side wall 114 wherein attachment means 116 comprise a hole 118 in the wall 114 and an arcuate shaped wall 120 integrally formed with side wall 114 and base 112. This arrangement provides an arched wall portion 122 suitable for engaging a hook or chain for suspending the tray while also preventing unwanted drainage of water from the soil and vegetable matter contained in the tray.

The shell 12 may be made from flexible light transmitting materials. This has the advantage that it requires minimal storage space. If flexible plastics material is used the desired shape of the shell may be obtained by incorporating suitable inflatable ribs using conventional techniques. Thus, Figure 11 shows a hemispherical shell portion 130 having equatorial and polar ribs 132 and 134 respectively, connected by longitudinal ribs 136. Ribs 132, 134 and 136 provide a frame for the support of panels 138. Two such hemispherical shell portions may be equatorially connected, for example at flange portions, using conventional fixing means such as adhesive tape, snap studs and magnetic means.

The shell 12 may be formed from flexible sheet material using frames, such as hoops or the like to provide the required shape. Figure 12 shows such an arrangement where three hoops 140, 142 and 146 are stitched or heat sealed to the flexible sheet material in order to provide the desired frustro-conical shaped shell. Elasticated portions 148 are provided at the top and bottom end of the shell in order to allow ventilation, drainage etc.

The suspended or upheld greenhouse of the invention is generally sized according to the basket or tray it surrounds. A spherical greenhouse is typically 400 to 500 mm diameter, the shell wall typically being 1 to 5 mm thick for a single wall version. Various sizes of the upper and lower apertures may be advantageous. For example, the upper aperture would be 50 to 100 mm diameter and the lower aperture could be somewhat smaller. The ratio in sizes of the upper aperture to the lower aperture may be 3:1.

In another form the invention may comprise a basket, tray or the like upheld above ground level, for example by brackets to a wall or post, the shell enclosing the basket, tray or the like and being supported thereby. Thus in this case the basket or tray is not suspended but is rather upheld by a bracket fixed to its side or underside part.

In particularly cold climates it has been found advantageous to construct the shell of the greenhouse of the invention such that there is an inner and an outer wall with an air gap between. This in effect provides a double-glazed shell thereby greatly improving the thermal insulation properties of the shell. The inner and outer shells may be formed integrally or as separate components held together by conventional fixing means such as by studs, clips and the like.

The applicant has found the greenhouses of the invention to be particularly advantageous, a significant temperature increases within the greenhouse being produced even with a single wall shell. For example, with a outside temperature of -4°C, the applicant has observed the temperature inside the hanging basket greenhouse to be significantly higher at +10°C. This is obviously advantageous in terms of protecting hanging basket plants from frost, and accelerating their development and growth early in the growing season. Also, the localised heating of the hanging basket causes the decomposition of the moss and/or compost contained within it to accelerate, so producing a further, complementary biological heating effect.

## Claims

1. A suspended greenhouse for cultivating vegetable matter held within a suspended container comprising a shell dimensioned to substantially surround the container and having means to maintain the shell in position.

2. A upheld portable greenhouse for cultivating vegetable matter held within an upheld container comprising a shell supported by the container or part of the container and adapted to substantially surround the container.

3. A greenhouse according to Claim 1 or 2 wherein support means co-operate with the container to maintain the shell round the container.

4. A greenhouse according to any preceding claim wherein the shell has at least one aperture to allow a suspending or upholding device to pass therethrough.

5. A greenhouse according to Claim 5 wherein an aperture co-operates with the suspending or upholding device to maintain the shell in position.

6. A greenhouse according to Claim 4 or 5 wherein a plug or filler plate is provided to engage within the aperture.

7. A greenhouse according to Claim 6 wherein the plug or filler plate has cut-out portions to receive the suspending or upholding device.

8. A suspended or upheld greenhouse according to any preceding claim wherein the shell comprises an inner and outer wall with an air gap between.

9. A suspended or upheld greenhouse according to any preceding claim wherein the shell comprises at least two portions that may be interlocked by fixing means.

10. A suspended or upheld greenhouse according to any preceding claim wherein the shell comprises an upper and a lower portion.

11. A suspended or upheld greenhouse according to any preceding claims wherein at least one portion of the shell has an aperture or plug to facilitate either drainage or ventilation of the greenhouse.

12. A suspended or upheld greenhouse for a container according to any preceding claim wherein the shell is substantially circular, arcuate, elliptical or parabolic in cross section along at least one plane.

13. A suspended or upheld greenhouse for a container according to any preceding claim wherein the shell is substantially spherical, hemispherical, conical, spherical-conical, frustro-conical, geodesic or pyramid shaped.

14. A suspended or upheld greenhouse according to any preceding claim wherein the shell is formed from plastics material.

15. A suspended or upheld greenhouse according to any preceding claim wherein the shell is formed from thin flexible sheet material.

16. A suspended or upheld greenhouse according to Claim 15 wherein the shell has inflatable ribs formed from the sheet material.

17. A suspended or upheld greenhouse according to Claim 15 wherein the shell has at least one rigid frame member attached to at least part of its inner or outer surface to provide a degree of rigidity to the shell and to achieve the required shell shape.

18. A suspended or upheld greenhouse according to Claim 15 wherein the shell has elasticated or pull chord means of adjusting the size of an upper and/or lower aperture.

19. A suspended or upheld greenhouse according to an of Claims 1 to 14 wherein the shell is formed from PERSPEX TM or acrylic or glass.

20. A suspended or upheld greenhouse according to any preceding claim wherein tethering means are provided to attach the shell of the greenhouse to an adjacent object.

21. A suspended or upheld greenhouse comprising a substantially transparent shell sized to fit around a container for plants.

22. A portable greenhouse substantially as described above or as schematically illustrated in Figures 1 to 12.
